# EUROPEAN PATENT APPLICATION

(11) **EP 4 601 153 A2**
(43) Date of publication of application: **13.08.2025**
(21) Application number: 25152303.1
(22) Date of filing: 16.01.2025
(51) Int. Cl.: H02J 7/00

(54) **CHARGING DEVICE AND CHARGING SYSTEM**

(30) Priority: 18.01.2024 CN 202410080401
(71) Applicant: Techtronic Cordless GP, Anderson, SC 29621 (US)
(72) Inventor: ZHANG, Ren, Dongguan City, Guangdong Province (CN); CATAPANG, Roniedel Reintegrado, Hong Kong (HK); BADAJOS, Errol John Ucab, Hong Kong (HK); LI, Jin, Dongguan City, Guangdong Province (CN); LIN, Qiang Qun, Dongguan City, Guangdong Province (CN); Jeffrey Carl, LOEBIG, Charlotte, North Carolina, 28262 (US)
(74) Representative: Meissner Bolte Partnerschaft mbB

(57) **Abstract**

The present disclosure provides a charging device configured to be operably mechanically and electrically connected with a plurality of battery packs to transmit power to battery packs or to allow the battery packs to transmit power to the charging device, wherein the charging device comprises: a first battery pack engaging portion arranged on a first surface for mechanically and electrically connecting with a first battery pack; a second battery pack engaging portion arranged on a second surface for mechanically and electrically connecting with a second battery pack; and an output port arranged on a third surface and configured to transmit power to the external device. The charging device controls, in a predetermined manner, the charging/discharging operations of the battery pack(s)/external device connected to the charging device in a case where the charging device is connected to the power grid or not connected to the power grid. The present disclosure further provides a charging system having the charging device. The charging device according to the present disclosure helps a user to select different charging/discharging modes as needed to achieve multi-functional charging/discharging operations, and is convenient for being carried.

## Description

### FIELD

The present disclosure relates to a charging device and a charging system having the same. The charging device is capable of supplying power to a battery pack used for a power tool or receiving power from the battery pack, and also capable of supplying power to an external device such as an electronic device.

### BACKGROUND

In a case where there is no fixed power source or it is not convenient for directly supply power, power is typically supplied using a removable battery pack attached to an electrical device that needs to be moved frequently, such as a power tool. The battery pack is connected to a charging device for being charged after the battery pack is depleted.

Generally, the charging device for charging the battery pack is only provided with a single charging interface/port, and can only charge one battery pack at one time. A user needs to manually disconnect the one battery pack from the charging device after the charging of the one battery pack is completed, and substitute another battery pack to be charged for the charging operation. This causes inconvenience and waste of time in the charging operation in the case where there are a plurality of battery packs to be charged. The user needs to pay attention to whether the charging of the battery pack being charged is completed or not, in order to substitute another battery pack in time, and cannot simultaneously connect the plurality of battery packs with the charging device to allow the charging device to control the charging operation of the plurality of battery packs.

In addition, since a common charging device only provides a specific type of charging interface/port, the battery pack must be provided with the specific type of interface accordingly for electrical connection with the charging device to perform the charging operation. This causes that the charging device does not have a desirable compatibility and cannot be adapted for multiple types of battery packs with different electrical connection ports.

In addition, the conventional charging devices are mostly single-functional, i.e., they can only provide one-way charging operation for the battery pack of the power tool, and cannot obtain power from the connected battery pack, and cannot power other types of electrical devices, such as electronic devices (e.g., digital products). As a result, the common charging devices have a single function and low integration and can only be used in few scenarios.

Therefore, it is desirable to provide an improved charging device and a charging system having the same, which possess aspects such as multiple functions, convenience, high efficiency and compactness.

### SUMMARY

It is an object of the present disclosure to provide a structurally-compact multi-functional charging device and system, to allow a user to perform charging and discharging operations for a plurality of electrical devices of different types or specifications with only one portable charging device, and also to achieve different charging and discharging modes to adapt for multiple types of different application scenarios.

To at least achieve the above purpose, according to one aspect of the present disclosure, there is provided a charging device configured to be operably mechanically and electrically connected with a plurality of battery packs at different sides of the charging device to transmit power to the battery packs or to allow the battery packs to transmit power to the charging device, characterized in that the charging device comprises: a first battery pack engaging portion for mechanically and electrically connecting with a first battery pack, wherein the first battery pack engaging portion is disposed on a first surface of the charging device, and is configured to allow the charging device to transmit power to the first battery pack and allowing the first battery pack to transmit power to the charging device; a second battery pack engaging portion for mechanically and electrically connecting with a second battery pack, wherein the second battery pack engaging portion is disposed on a second surface of the charging device different from the first surface and is configured to allow the charging device to transmit power to the second battery pack and allow the second battery pack to transmit power to the charging device; and an output port which is arranged on a third surface of the charging device different from the first surface and the second surface, and is configured to be able to electrically connect with an external device to transmit power to the external device,
wherein, when the charging device is electrically connected to a commercial power grid, the charging device is configured to respectively distribute an output current value to each of battery packs and/or external device electrically connected to the charging device and to be charged, according to one or more of the following parameters, and simultaneously transmit power to the battery packs and/or the external device according to distributed output current values: a number of electrically-connected battery packs and/or external device, a predetermined priority relationship regarding current value distribution, and a rated output current value at an interface of the charging device corresponding to each of the battery packs and/or external device; and
wherein, when the external device and at least one battery pack are simultaneously connected to the charging device, while the charging device is not electrically connected to the mains power grid, the charging device is configured to enable the at least one battery pack to transmit power to the external device.

In some embodiments, the first battery pack engaging portion comprises: a first charging interface through which the first battery pack is able to transmit power to the charging device; and a first discharging interface through which the charging device is able to transmit power to the first battery pack, and the second battery pack engaging portion comprises: a second charging interface through which the second battery pack is able to transmit power to the charging device; and a second discharging interface through which the charging device is able to transmit power to the second battery pack.

In some embodiments, the first surface and second surface are located on opposite sides of the charging device, respectively.

In some embodiments, the charging device further comprises an input port disposed on the third surface and wherein the input port is configured to be able to electrically connect to an external adapter electrically connected to the commercial power grid to transmit power to the charging device.

In some embodiments, when the external adapter is electrically connected to the input port and supplies power to the charging device, the charging device is configured to preferentially distribute an output current value to the external device.

In some embodiments, when the external adapter is electrically connected to the input port and supplies power to the charging device at an input current value I₀, the charging device is configured to: when the first battery pack and the second battery pack and the external device are simultaneously electrically connected to the charging device and are all in a charging state, preferentially transmit power to the external device at a rated output current value I₁ at the output port, and distribute at least a portion of a remaining current value I₀-I₁ to the first battery pack and the second battery pack, respectively, according to a rated capacity levels of each of the first battery pack and second battery pack and in combination with taking into account a rated output current value at the interface to which each battery pack is connected.

In some embodiments, when the external adapter is electrically connected to the input port and supplies power to the charging device at an input current value I₀, the charging device is configured to: when the external device and one of the first battery pack and the second battery pack are simultaneously electrically connected to the charging device and both in a charging state, preferentially transmit power to the external device at a rated output current value I₁ at the output port, and distribute at least a portion of the remaining current value I₀-I₁ to the electrically-connected battery pack taking into account a rated output current value at the interface to which the battery pack is electrically connected.

In some embodiments, when the external adapter is electrically connected to the input port and supplies power to the charging device at an input current value I₀, the charging device is configured to: when the first battery pack and the second battery pack are simultaneously connected to the charging device and both in a charging state, and there is no external device connected to the charging device, distribute at least a portion of the input current value I₀ to the first battery pack and the second battery pack respectively, according to a rated capacity levels of each of the first battery pack and the second battery pack and in combination with taking into account a rated output current value at the interface to which each battery pack is electrically connected.

In some embodiments, in a case where a sum of a rated output current value I₂ at the interface to which the first battery pack is connected and a rated output current value I₃ at the interface to which the second battery pack is connected does not exceed the input current value I₀, the charging device is configured to transmit power to the first battery pack at the rated output current value I₂, and transmit power to the second battery pack at the rated output current value I₃.

In some embodiments, when a sum of the rated output current values at the interfaces to which the first battery pack and second battery pack are electrically connected exceeds a total current value that is able to be distributed to the first battery pack and the second battery pack: if a rated capacity level of the first battery pack is higher than a rated capacity level of the second battery pack, a current value distributed to the first battery pack is higher than a current value distributed to the second battery pack; and if the rated capacity level of the first battery pack is equal to the rated capacity level of the second battery pack, the current value distributed to the first battery pack is equal to the current value distributed to the second battery pack

In some embodiments, when the first battery pack, the second battery pack and the external device are simultaneously electrically connected to the charging device, while the charging device is not electrically connected to the commercial power grid, the charging device is configured to control the first battery pack and second battery pack to transmit power to the external device according to a remaining capacity of each of the first battery pack and the second battery pack.

In some embodiments, the charging device is configured to: when a remaining capacity of the first battery pack is higher than a remaining capacity of the second battery pack, control the first battery pack to transmit power to the external device until the remaining capacity of the first battery pack is equal to the remaining capacity of the second battery pack; and control the first battery pack and the second battery pack to simultaneously transmit power to the external device when the remaining capacity of the first battery pack is equal to the remaining capacity of the second battery pack.

In some embodiments, the first discharging interface, the second discharging interface, and/or the input port are USB-C interfaces, and/or the output port is a USB-A interface.

In some embodiments, the charging device comprises a housing, and the housing comprises: a body portion, and a first end cover and a second end cover at opposite ends of the body portion, wherein the first and second end covers are configured to be respectively engageable with the opposite ends of the body portion to together define an interior space of the housing, wherein the first surface is formed by the first end cover, the second surface is formed by the second end cover, and the third surface is formed by the body portion.

In some embodiments, each of the first end cover and the second end cover are configured to have a concave structure recessed toward the interior space of the housing, wherein the concave structure is configured to be shaped to mate with a corresponding convex structure on each of the first battery pack and the second battery pack to receive the convex structure when the battery pack is connected to the charging device, and wherein the first surface and the second surface are formed by a bottom surface of the concave structure of the first end cover and a bottom surface of the concave structure of the second end cover, respectively.

In some embodiments, a control component is disposed within the housing, and the control component comprises: a first circuit board located at a middle position of the body portion and extending substantially parallel to the first end cover and the second end cover ; a second circuit board and a third circuit board which are respectively located on both sides of an extension plane defined by the first circuit board and extend substantially parallel to the first circuit board; and a fourth circuit board located at a side edge position of the first circuit board and extending substantially perpendicular to the first circuit board.

In some embodiments, the first charging interface and the second charging interface are arranged directly on the first circuit board, and extend from surfaces on opposite sides of the first circuit board along opposite directions respectively, and the first surface and the second surface are each provided with a first opening that allows the first charging interface and the second charging interface to be exposed to a corresponding interface on the battery pack.

In some embodiments, each of the first charging interface and the second charging interface comprises: a plurality of terminals configured to extend from the first circuit board towards a first opening in a respective surface of the first surface and second surface, the plurality of terminals comprising: a positive charging terminal and a negative charging terminal which are engageable with corresponding terminals in a connected battery pack to allow the battery pack to transmit power to the charging device; and a receiving portion arranged around the plurality of terminals, the receiving portion being configured to extend from the first circuit board to be flush with the first opening of a respective surface of the first surface and second surface, and be shaped to mate with the first opening, and wherein the receiving portion is configured to be shaped to mate with a protruding portion of a corresponding interface of the connected battery pack, so as to accommodate the protruding portion.

In some embodiments, the plurality of terminals further comprise: a temperature terminal; an encrypted communication terminal; and a positive discharging terminal and a negative discharging terminal, which can engage with corresponding terminals in the connected battery pack to allow the charging device to transmit power to the battery pack.

In some embodiments, the first discharging interface and the second discharging interface are respectively arranged on surfaces of the second circuit board and the third circuit board facing away from each other, and extend in opposite directions beyond second openings respectively provided on the first surface and the second surface and allowing the first discharging interface and the second discharging interface to be exposed to corresponding interfaces of the connected battery packs.

In some embodiments, the input port and the output port are disposed on the fourth circuit board, and extend towards the body portion of the housing to a position flushing with a third opening and a fourth opening provided on the third surface and respectively allowing the input port and output port to be exposed to corresponding interfaces of the external adapter and the external device.

In some embodiments, the body portion of the housing is constructed as a layered structure which comprises an inside support layer and a covering layer covering an outer side of the support layer, wherein the support layer comprises a plastic material, and the covering layer comprises a thermoplastic elastomeric material.

In some embodiments, the support layer has a thickness of 1.8 mm, and the covering layer has a thickness of 1.2 mm.

In some embodiments, the third opening and the fourth opening on the third surface are provided on the support layer, and the covering layer is provided with a material removal area around the third opening and the fourth opening, and
wherein the covering layer is sealingly secured to the support layer along an edge of the material removal area, so as to form a sealed edge having a 1 mm width perpendicular to an extension direction of the edge.

In some embodiments, the first circuit board, the second circuit board, and/or the third circuit board are secured to the housing by a threaded connection, and wherein the fourth circuit board is fixedly connected to the first circuit board by a bracket, and the second circuit board and/or the third circuit board are relatively fixed to the first circuit board by a rested member.

In some embodiments, the bracket is provided with a sliding portion for engaging a slide rail disposed on an inner wall of the housing to guide the control component into the housing.

In some embodiments, the first battery pack engaging portion and the second battery pack engaging portion are each provided with a snap receiving portion for mating with a snap member correspondingly disposed on each of the first battery pack and the second battery pack, so as to mechanically fix the battery pack to the charging device.

In some embodiments, if a remaining capacity of the first battery pack is higher than a remaining capacity of the second battery pack, a current value distributed to the first battery pack is lower than a current value distributed to the second battery pack; and if the remaining capacity of the first battery pack is equal to the remaining capacity of the second battery pack, the current value distributed to the first battery pack is equal to the current value distributed to the second battery pack.

In some embodiments, when the charging device is not electrically connected to the commercial power grid and the first battery pack and/or the second battery pack are electrically connected to the charging device, the charging device is configured to automatically wake up and supply power to the external device upon the external device being electrically connected to the charging device.

According to another aspect of the present disclosure, there is provided a charging system comprising: the charging device according to any of the preceding embodiments; and at least one of an external device, an external adapter, and a plurality of battery packs that is able to be mechanically and electrically connected to the charging device.

According to the present disclosure, different surfaces (first and second surfaces of opposite ends) of the charging device are provided with two battery pack engaging portions for engaging with a rechargeable battery pack of the power tool, each engaging portion enables bi-directional current transmission between the charging device and the battery pack connected to the engaging portion, and the third surface (e.g., at a peripheral side) of the charging device is provided with a charging interface for taking power from the commercial power grid and a discharging interface for supplying power to the external device. Such a charging device can provide multiple charging/discharging functions/modes, and is simple and compact in structure and convenient for carrying. In addition, the charging device according to the present disclosure controls, in a predetermined manner, the charging/discharging operations of the battery pack/external device connected to the charging device in a case where the charging device is connected to the power grid or not connected to the power grid. The control manner of the present disclosure exhibits a high flexibility, and is able to control the distribution of the current according to multiple parameters, thereby allowing the charging device and the charging system to be applied to multiple and different scenarios and reducing the need for manual intervention.

### BRIEF DESCRIPTION OF THE DRAWINGS

Reference may be made to preferred embodiments shown in the drawings to make the above and other objects, features, advantages and functions of the present disclosure more apparent. The same reference numbers in the figures denote the same parts. Those skilled in the art should appreciate that the drawings are intended to schematically illustrate preferred embodiments of the present disclosure, and not to limit the scope of the present disclosure. The parts in the figures are not drawn to scale.
FIG. 1 shows a perspective view of a charging device according to a preferred embodiment of the present disclosure, wherein a first battery pack engaging portion is displayed;
FIG. 2 shows a perspective view of a charging device according to a preferred embodiment of the present disclosure from another view angle, wherein a second battery pack engaging portion is displayed;
FIG. 3 shows an exploded schematic view of a charging device according to a preferred embodiment of the present disclosure;
FIG. 4 shows a schematic view of a first end cover of a housing of a charging device according to a preferred embodiment of the present disclosure;
FIG. 5 shows a schematic view of a main body member of a housing of a charging device according to a preferred embodiment of the present disclosure;
FIG. 6 shows a schematic view of a control component of a charging device according to a preferred embodiment of the present disclosure;
FIG. 7 shows a schematic view of a control component of a charging device according to another preferred embodiment of the present disclosure;
FIG. 8 to FIG. 9 are schematic views of the control component of the charging device shown in FIG. 6 from other view angles;
FIG. 10 shows a perspective view of an exemplary battery pack that is able to mate with the charging device according to the present disclosure.

### Description of Reference Numerals:

1: A charging device; 11: A first battery pack engaging portion; 111: A first charging interface; 1111a: A positive charging terminal; 1111b: A negative charging terminal; 1112a: A communication terminal; 1112b: A communication terminal; 1113: A receiving portion; 112: A first discharging interface; 113: A snap receiving portion; 12: A second battery pack engaging portion; 121: A second charging interface; 122: A second discharging interface; 13: An input port; 14: An output port; 15: A housing; 151: A first end cover; 1511: A concave structure of the first end cover; 15111: A bottom surface of the concave structure; 15112: A first opening; 15113: A second opening; 152: A second end cover; 153: A body portion; 1531: A third opening; 1532: A fourth opening; 1533: A snap structure; 1534: A material removal area; 16: A control component; 161: A first circuit board; 162: A second circuit board; 163: A third circuit board; 164: A fourth circuit board; 165: A bracket; 1651: Alug; 1652: A screw; 1653: A screw receiving structure; 1654: A sliding portion; 167: An electric wire; 168: A rested member; 2: A battery pack; 21: An engaging structure of the battery pack; 211: A discharging interface of the battery pack; 212: A charging interface of the battery pack; 213: A snap member of the battery pack; 2511: A convex structure of battery pack.

### DETAILED DESCRIPTION OF EMBODIMENTS

Specific embodiments of the present disclosure will now be described in detail with reference to figures. What are described herein are merely preferred embodiments according to the present disclosure. On the basis of the preferred embodiments, those skilled in the art may conceive of other ways of implementing the present disclosure, which also fall within the scope of the present disclosure.

According to an aspect of the present disclosure, there is provided a charging device configured to be operably mechanically and electrically connected with a plurality of battery packs at different sides of the charging device, to transmit power to the battery packs or to allow the battery packs to transmit power to the charging device, the charging device comprising: a first battery pack engaging portion for mechanically and electrically connecting with a first battery pack, wherein the first battery pack engaging portion is disposed on a first surface of the charging device, and configured to allow the charging device to transmit power to the first battery pack and allow the first battery pack to transmit power to the charging device; a second battery pack engaging portion for mechanically and electrically connecting with a second battery pack, the second battery pack engaging portion being disposed on a second surface of the charging device different from the first surface and being configured to allow the charging device to transmit power to the second battery pack and allowing the second battery pack to transmit power to the charging device; and an output port disposed on a third surface of the charging device different from the first surface and the second surface, and configured to be electrically connected with an external device to transmit power to the external device. Preferably, the first surface and the second surface are located on opposite sides of the charging device, respectively.

Preferably, the first battery pack engaging portion comprises: a first charging interface through which the first battery pack is able to transmit power to the charging device; and a first discharging interface through which the charging device is able to transmit power to the first battery pack, and the second battery pack engaging portion comprises: a second charging interface through which the second battery pack is able to transmit power to the charging device; and a second discharging interface through which the charging device is able to transmit power to the second battery pack.

More preferably, the charging device further comprises an input port disposed on the third surface and configured to be electrically connected to an external adapter, wherein the external adapter is electrically connected to a power grid to transmit power to the charging device.

The battery pack as described above may be a repeatedly chargeable and rechargeable secondary battery pack that can be attached to a power tool to supply power to the power tool, and can be detached from the power tool and connected to a charging device for charging and discharging operations. The power tool may be one of various frequently-movable power tools, household cleaning appliances, kitchen appliances or medical appliances and the like that can be envisaged by those skilled in the art, such as a food processor, a sander, a nailer, a hammer drill, a vacuum cleaner, a power drill and the like. The external device as described above may be one of various small-sized electrical devices that can be envisaged by those skilled in the art, such as digital products/electronic devices such as mobile phones, tablets, computers, cameras, or devices consuming less power such as portable lighting devices. Below, the content of the present disclosure will be described in detail with reference to embodiments exemplarily shown in the figures. It needs to be appreciated that the following depictions are only exemplary and not restrictive.

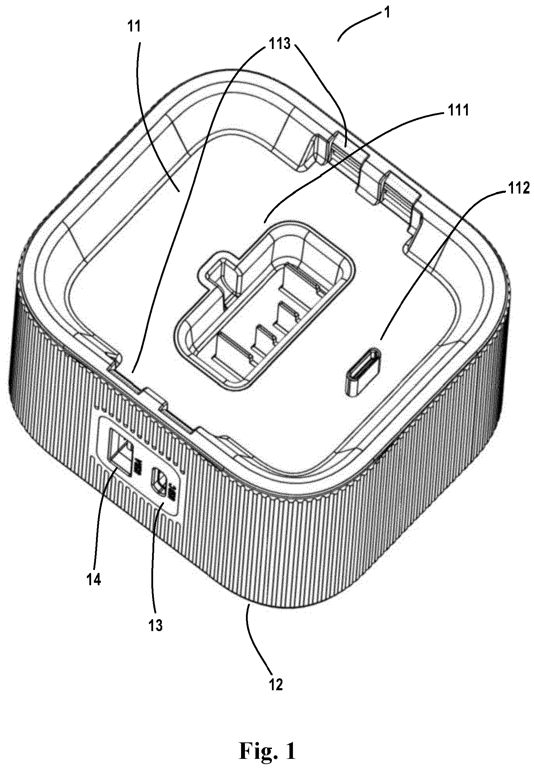

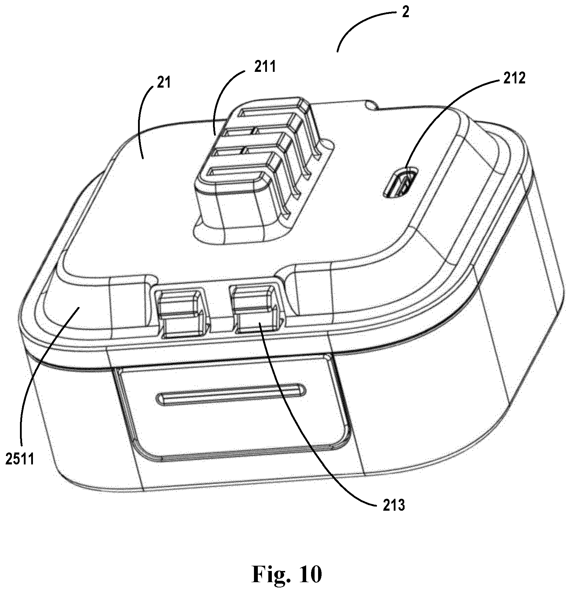

FIG. 1 shows a charging device 1 according to a preferred embodiment of the disclosure, which is able to be operably, detachably connected mechanically and electrically with, for example, a battery pack of a power tool. The charging device 1 comprises a first battery pack engaging portion 11 on a first surface at a first side. The engaging structure 11 is able to mate with a corresponding engaging structure 21 on a first battery pack (e.g., a battery pack 2 shown in FIG. 10) when the first battery pack is mounted to the charging device 1, to achieve a mechanical connection as well as an electrical connection.

Specifically, the first battery pack engaging portion 11 comprises a first charging interface 111 that is able to engage with a corresponding discharging interface 211 on the first battery pack, to allow the first battery pack to transmit power to the charging device, that is, the electrical connection between the first charging interface 111 and the corresponding discharging interface 211 on the corresponding battery pack 2 is able to allow one-way power transmission from the battery pack to the charging device. Furthermore, the first battery pack engaging portion 11 further comprises a first discharging interface 112 that is able to engage with a corresponding charging interface 212 on the first battery pack to allow the charging device to transmit power to the first battery pack via the interface, i.e., the electrical connection between the first discharging interface 112 and the corresponding charging interface 212 on the corresponding battery pack 2 is able to allow one-way power transmission from the charging device to the battery pack. Thus, bi-directional power transmission between the battery pack and the charging device is achieved by the first battery pack engagement portion 11. It may be appreciated that those skilled in the art may set the first charging interface and/or first discharging interface as a bi-directional current transmission interface (for example, add terminals to the interface, or change a communication control method of the interface) as needed, so that a single interface itself can realize both the power transmission from the battery pack to the charging device as well as the power transmission from the charging device to the battery pack. In this way, the charging device is provided with higher compatibility, so that battery packs having different types of interfaces can be attached to the charging device for charging and discharging operations. For example, battery packs having only the interface 211 or only the interface 212 are all able to be connected to the charging device 1 for power transmission.

Furthermore, the battery pack 2 further preferably comprises a structure (for example, a snap member 213 shown in FIG. 10) for mechanically fixing with the first battery pack engaging portion 11 of the charging device 1. When the engaging structure 21 of the battery pack 2 is inserted into a proper position in the first battery pack engaging portion 11, the snap member 213 of the battery pack snap-fits with a corresponding snap receiving portion 113 disposed on the charging device, so that the battery pack is fixed in place on the charging device and will not be easily disengaged without manual manipulation. Such an arrangement allows the charging device and the connected battery pack as a whole to be conveniently carried with reliability and convenience.

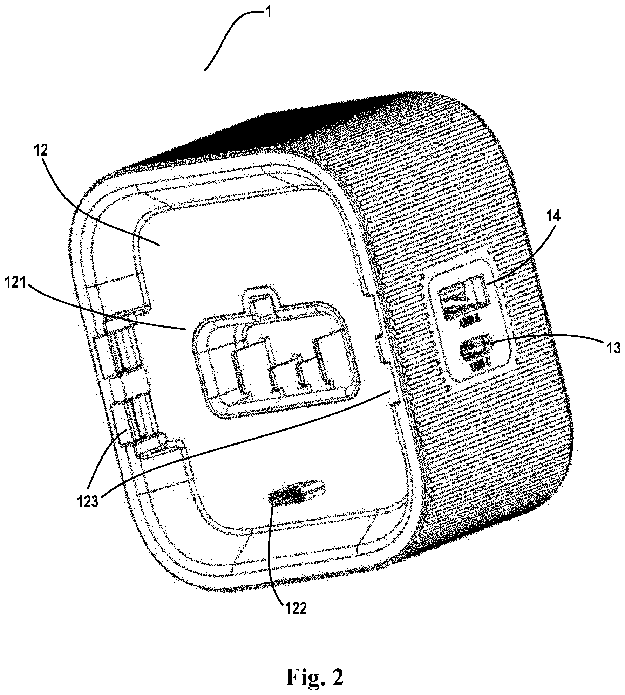

Further preferably, as shown in FIG. 2, the charging device 1 comprises a second battery pack engaging portion 12 on a second surface of a second side. The second side and the second surface are preferably different side and surface from the first side and the first surface described above, and more preferably, the first side and the second side are two opposite end sides of the charging device 1. The second battery pack engaging portion 12 is able to mate with a corresponding engaging structure of the second battery pack when the second battery pack is attached, to achieve mechanical connection as well as electrical connection. Similar to the above discussion of the first battery pack engaging portion 11, the second battery pack may also be the battery pack 2 shown in FIG. 10, and preferably, the second battery pack engaging portion 12 may have a structure identical with or similar to as the first battery pack engaging portion 11. For example, the second battery pack engaging portion 12 has a second charging interface 121, a second discharging interface 122, and a receiving portion 123. The structures and functions of these parts are all preferably the same as those of corresponding parts of the first battery pack engaging portion 11, and will not be described in detail any more here.

Further preferably, the charging device 1 further comprises an input port 13 and an output port 14 disposed on a third surface different from the first surface and the second surface. Preferably, the third surface is defined by a peripheral side between both end portions of the charging device 1. The input port 13 is configured to be electrically connected with an external adapter and electrically connected with a power grid via the adapter to obtain power from the power grid. The adapter may be a common interface converter available in the market, and internally contains a transformer for transforming an alternating current of a commercial power grid into a direct current supplied to the charging device of the present disclosure, for example a direct current with a voltage of 5V and a current of 4A. The output port 14 is configured to be electrically connected with an external device, such as a digital/electronic device, to transmit power to the external device. For example, power may be transmitted to the external device by electrically connecting a data line commonly used to charge an electronic device (such as a mobile phone or a computer) between the output port 14 and the corresponding external device.

According to the above arrangement of the present disclosure, the different surfaces (the first and second surfaces on the opposite ends) of the charging device are provided with two battery pack engaging portions for engaging with the rechargeable battery packs of the power tools, each engaging portion being capable of achieving the bi-directional current transmission between the charging device and the battery pack connected at the engaging portion; and the third surface (e.g., on the peripheral side) of the charging device is provided with the charging interface for taking power from the power grid and the discharging interface for supplying power to the external device. Such a charging device is able to provide multiple charging/discharging functions/modes, is simple and compact in structure and convenient for carrying, and can be used in multiple scenarios. Such a charging device is able to provide multiple charging and discharging functions/modes, for example, it is able to be electrically connected to the power grid to simultaneously power one or more connected battery packs and the external device, and is also able to allow the battery pack(s) to transmit power back, to power the connected external device in the event that the commercial power is unavailable.

Arranging the charging interface and the discharging interface for connecting the same one battery pack on the same surface of the charging device enables a compact overall structure, and meanwhile prevent these interfaces and their corresponding battery pack interfaces from interfering with other structures under the connected state. Such an arrangement is able to further prevent a dangerous situation in which the battery pack receives power from the charging device via its charging interface 212 while transmitting power to the power tool via its discharging interface 211 due to the user's mis-operation. That is, such an arrangement plays a "fool-proof' role to a certain degree.

In a preferred embodiment, the first discharging interface 112, the second discharging interface 212, and/or the input port 13 of the charging device 1 may for example be USB-C interfaces, and the output port 14 may for example be a USB-A interface. It may be appreciated by those skilled in the art may select suitable types of interfaces to achieve the above functions as needed. In a preferred embodiment, a rated power transmission rate or rated transmission current value of the charging interfaces 111, 121 for the battery pack is higher than that of the discharging interfaces 112, 122.

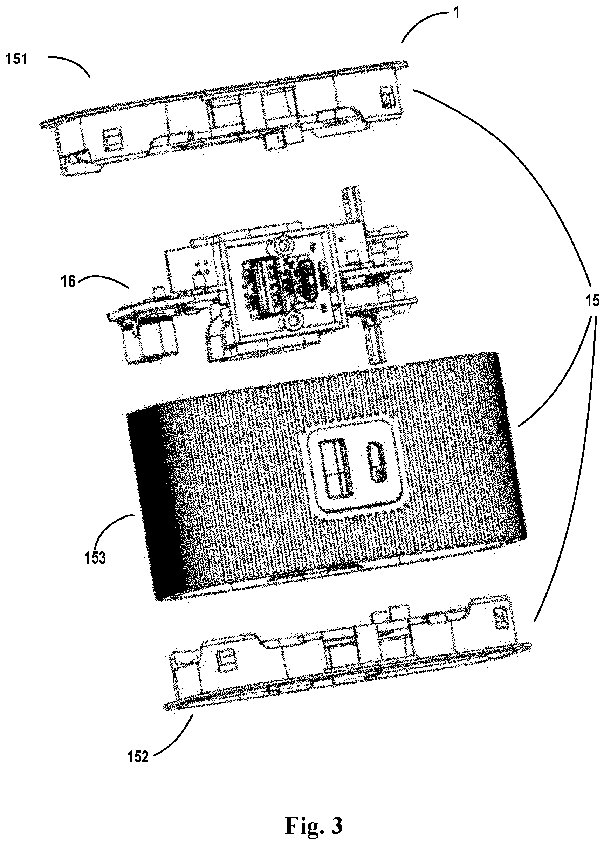

Next, the detailed structure of the charging device 1 according to the preferred embodiment of the present disclosure will be described in detail with reference to FIG. 3 through FIG. 9. As shown in FIG. 3, the charging device 1 comprises a housing 15 and a control component 16 within the housing. The housing 15 comprises a body portion 153, and a first end cover 151 and a second end cover 152 at opposite ends of the body portion. The two end covers the body portion by, for example, snaps, to together define an inner receiving space of the housing 15. It may be appreciated that the end covers may also be detachably or non-detachably engaged with the body portion in other readily-envisageable manners, for example by gluing, hooking, welding, threaded connection or the like. Accordingly, the first surface is formed by the first end cover 151, the second surface is formed by the second end cover 152, and the third surface is formed by the body portion 153.

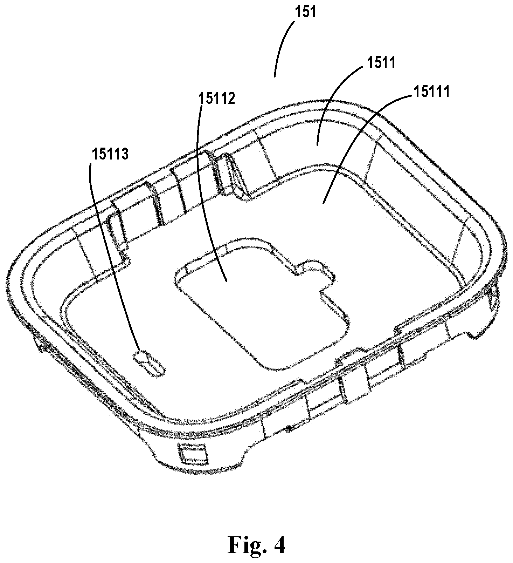

FIG. 4 exemplarily shows the detailed structure of the first end cover 151 of the housing 15 described above, and does not show other parts of the charging device 1 for the sake of clarity and brevity. It is appreciated that, in the present embodiment, the structure and the corresponding function of the second end cover 152 are preferably substantially the same as those of the first end cover 151. Therefore, the detailed structure of the end cover will be described below only by taking the first end cover 151 shown in FIG. 3 as an example, and the second end cover 152 will not be described repeatedly. Specifically, the first end cover 151 comprises a concave structure 1511 recessed toward the inner space of the housing 15, wherein the concave structure is able to be shape-fitted with a corresponding convex structure 2511 of the connected first battery pack (e.g., the battery pack 2 shown in FIG. 10) to receive the convex structure 2511 when the battery pack is inserted into the concave structure. Correspondingly, the first surface as described above is formed by a bottom surface 15111 of the concave structure 1511. Furthermore, a first opening 15112 and a second opening 15113 respectively corresponding to the first charging interface 111 and the first discharging interface 112 are formed at the bottom surface 15111 of the first end cover 151, to allow the first charging interface 111 and first discharging interface 112 to respectively be exposed from the first opening 15112 and second opening 15113, in an assembled state, thereby allowing the corresponding interfaces on the battery pack to be mated therewith. It may be appreciated that preferably, the second end cover 152 also comprises the concave structure, the bottom surface, and the openings described above. In addition, the above-mentioned receiving portion 113, which is provided corresponding to and snap-fitted with the snap member 213 of the battery pack 2, preferably comprises through holes formed at sides of the concave structures of the first and second end covers. The through holes allow the snap member 213 to extend through the end covers 151, 152 to mate with a snap structure correspondingly arranged on inner walls of the body portion 153 of the housing 15 to fixedly connect the battery pack to the charging device.

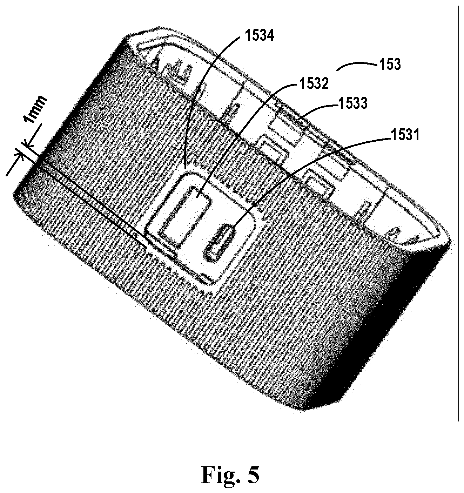

FIG. 5 exemplarily illustrates the detailed structure of the body portion 153 of the housing 15, and does not show other parts of the charging device 1 for the sake of clarity and brevity. The body portion 153 extends in a peripheral direction between the first end cover and the second end cover. A third opening 1531 and a fourth opening 1532 respectively corresponding to the input port 13 and the output port 14 are disposed at one or more peripheral side surfaces (i.e., the third surface) of the body portion, to allow the input port 13 and the output port 14 to be respectively exposed from the third opening 1531 and fourth opening 1532 in an assembled state, so that corresponding adapters and corresponding interfaces of data lines connected with external devices are able to mate with the interfaces. In the embodiment shown in FIG. 5, the body portion surrounds to form a substantially rectangular parallelepiped shape, wherein the third and fourth openings and the corresponding input port and output port are arranged on the same side of the rectangular parallelepiped. Such an arrangement on the same side is relatively compact and easy to operate. It will be appreciated by those skilled in the art that the shape of the body portion may be designed as desired, for example cylindrical, and/or that the third and fourth openings (and corresponding input port and output port) may be arranged on different sides of the body portion, and/or that a plurality of third and fourth openings (and corresponding input ports and output ports) may be arranged on the same side or on different sides. All of these variations fall within the scope of the present disclosure.

Furthermore, as shown in FIG. 5, the body portion 153 further comprises a snap structure 1533 provided on the inner wall. When the battery pack is mounted to the charging device and fixed in position, the snap member 213 of the battery pack 2 extends through the correspondingly-provided through hole in the end cover 151, 152 to mate with the snap structure 1533 of the body portion to form a fixed connection. That is, the above-mentioned receiving portion 113 arranged corresponding to and snap-fitted with the snap member 213 of the battery pack 2, is together formed by the through hole on the side of the concave structure of the end cover and the snap structure on the inner wall of the body portion, to securely hold the connected battery pack on the charging device until the user manually unlocks the snaps to separate the charging device and the battery pack. Such mechanical connection and affixation enable continuous charging/discharging operation for example during transportation, carrying, etc. without easy disengagement.

Furthermore, the body portion 153 is preferably constructed as a layered structure which comprises a support layer for supporting the entire structure of the body portion on a side near the inner space of the housing, and a covering layer covering a side of the support layer near the external. The covering layer is able to increase the surface friction of the charging device, thereby facilitating gripping and carrying, and enhancing the tactile sensation. The covering layer preferably wraps the support layer over substantially the entire peripheral side extension area of the body portion except for the area near the third opening 1531 and fourth opening 1532 disposed on the support layer. That is, the covering layer wraps most of the peripheral side of the support layer, only with a material removal area 1534 provided only near the openings 1531, 1532 to allow for electrical connection. Preferably, the covering layer is sealingly secured to an outer side surface of the support layer along an edge of the material removal area 1534, to form a sealed edge having a preferably 1 mm width perpendicular to an extension direction of the edge. Further preferably, the covering layer further wraps end surfaces of both ends of the support layer, so that when the body portion is assembled with the first and second end covers, an edge on a side of the end cover facing the body portion directly contacts with the covering layer of the body portion so as to improve the sealing performance and reduce wear caused by the assembling. Further preferably, the support layer has a thickness of 1.8 mm and the covering layer has a thickness of 1.2 mm. Further preferably, the support layer comprises a rigid plastic material (e.g., PC, ABS material or a combination thereof) and the covering layer comprises a thermoplastic elastomeric material (e.g., TPE, TPU material or a combination thereof).

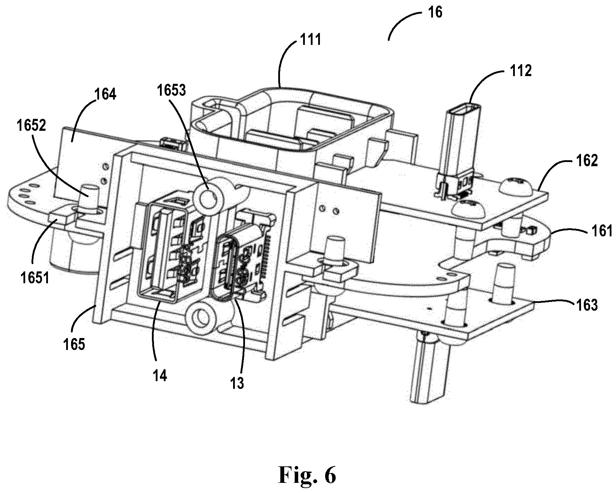

Furthermore, FIG. 6 through FIG. 9 show exemplary arrangements of the control component 16 inside the housing 15 according to the present disclosure. The control component 16 comprises a plurality of circuit boards, and electronic elements and the above discussed power transmission interface-related components arranged on the circuit boards. For the sake of simplicity and clarity, the figures do not show structures such as some electronic elements on the circuit boards. As shown in FIG. 6, the control component 16 comprises: a first circuit board 161 located at a middle position of the body portion and extending substantially parallel to the extension directions of the first and second end covers; a second circuit board 162 and a third circuit board 163 respectively located at both sides of an extension plane defined by the first circuit board, and extending substantially parallel to the first circuit board; and a fourth circuit board 164 located at a side edge position of the first circuit board and extending substantially perpendicular to the first circuit board.

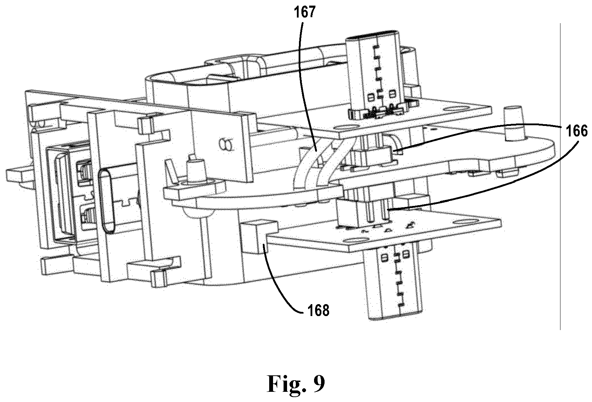

Further preferably, the first circuit board 161 is a main circuit board on which various electronic elements (not shown) for controlling the operation of the charging device are arranged, and other circuit boards are all electrically and communicatively connected to the first circuit board. For example, in the embodiment shown in FIG. 9, the second and third circuit boards 162, 163 are electrically and communicatively connected to the first circuit board 161 via an electrical connector 166, and the fourth circuit board is electrically and communicatively connected to the first circuit board 161 via an electrical wire 167. It is understood that the connection manner between the circuit boards is not limited to the manners shown in the above embodiments, and those skilled in the art can realize electrical connection and communicative connection between the circuit boards in various different connection manners as needed, so as to achieve various control modes.

Furthermore, the first charging interface 111 and the second charging interface 121 described above are arranged on the first circuit board 161, and extend from opposite side surfaces of the circuit board toward opposite directions respectively, i.e., respectively extend towards the first end cover 11 and the second end cover 12 to the corresponding openings disposed in the end covers (for example, the first opening 15112 in the first end cover 11). Furthermore, each of the first charging interface 111 and the second charging interface 121 comprises: a plurality of terminals extending from the first circuit board toward the respective opening provided on the surface of the respective end cover, and a receiving portion arranged around the plurality of terminals. The receiving portion is configured to extend from the first circuit board 161 to be flush with the respective opening of the surface of the respective end cover, and to match the shapes of the openings, and preferably, the receiving portion is shaped to match with a protruding portion of the corresponding interface (e.g., the discharging interface 211 of the battery pack 2) of the corresponding connected battery pack, and configured to receive the protruding portion when the battery pack is attached.

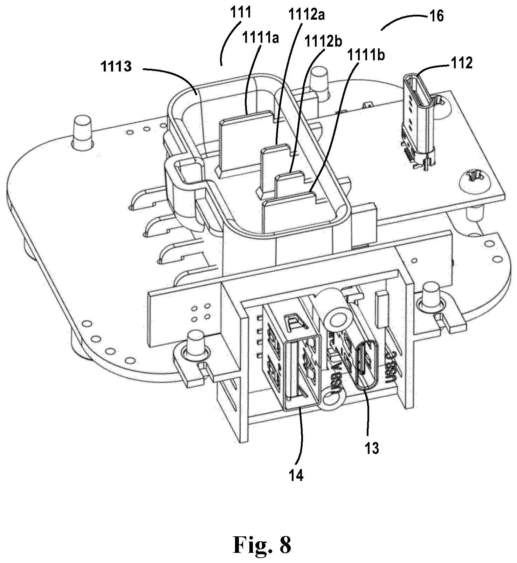

More specifically, referring to FIG. 8, the plurality of terminals of the first charging interface 111 comprise: a positive charging terminal 1111a and a negative charging terminal 1111b, which are engageable with corresponding terminals in the corresponding connected battery pack to allow the battery pack to transmit power to the charging device; a communication terminal 1112a (for example, an NTC terminal) for detecting a temperature or acquiring temperature information; and a communication terminal 1112b electrically connected with a corresponding encrypted communication terminal on the battery pack and performing identity authentication for a security purpose. When the communication terminal on the charging device and the encrypted communication terminal on the battery pack pass the identity authentication, i.e., when "handshake is successful", further operations such as power supply or charging can be continued between the battery pack and the charging device.

More preferably, those skilled in the art can further arrange more terminals in the first charging interface 111 as needed, for example, a positive discharging terminal and a negative discharging terminal capable of engaging with corresponding terminals in the corresponding connected battery pack to allow the charging device to transmit power to the battery pack. In this way, the first charging interface of the charging device can realize the function of receiving power from the battery pack as well as the function of supplying power to the battery pack, such that the charging device is able to be controlled to choose either the interface 111 or interface 112 to supply power to the connected battery pack, which enhances the controllability of the charging device. Furthermore, the receiving portion 1113 as described above is disposed around the plurality of terminals. It needs to be appreciated that although the plurality of terminals and receiving portion are described in detail above with reference to the first charging interface 111, the second charging interface 112 also preferably has the same or similar arrangement, which is symmetrical to the first charging interface 111, and will not be described in detail any more herein.

Further referring to FIG. 6, the first discharging interface 112 and the second discharging interface 122 described above are respectively disposed on surfaces of the second circuit board 162 and the third circuit board 163 facing away from each other, and extend in opposite directions beyond respective openings disposed in the surfaces of the respective end covers (e.g., the second opening 15113 in the first end cover 151). Such an arrangement of the second and third circuit board 162, 163 positioned closer to the end cover than the first circuit board 161 allows the first discharging interface 112 and second discharging interface 122 (e.g., a USB-C type discharging interface) which are smaller in size than the first and second charging interfaces 111, 121, to extend beyond the surfaces of the end covers to be engaged by the corresponding interface 212 of the battery pack.

Furthermore, the input port 13 and the output port 14 described above are disposed on the fourth circuit board 164, and respectively extend towards the third opening 1531 and fourth opening 1532 on the surface of the body portion 153 of the housing to be flush with the corresponding openings, so that the input port 13 and the output port 14 is able to be engaged by the corresponding interfaces of the adapter and the external device.

Preferably, the first, second and third circuit boards are fixed in corresponding receiving structures on an inner wall of the body portion 153 of the housing 15 by means of one or more screws provided at a peripheral side of the circuit boards, thereby being fixed in the housing. In addition, the second circuit board 162 and the third circuit board 163 preferably rest on rested members (e.g., rested members 168 shown in FIG. 9) extending from back sides of the receiving portions 1113 of the first and second charging interfaces 111, 121, thereby remaining fixed relative to the first circuit board 161.

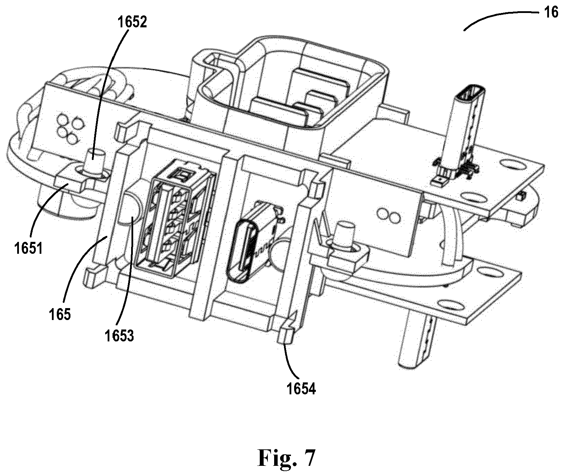

Further preferably, as shown in FIG. 5, a bracket 165 is also provided for securing the fourth circuit board 164 to the first circuit board 161 and thereby securing the fourth circuit board 164 within the housing 15. The bracket 165 is secured to the fourth circuit board 164 via an interconnection of screw receiving structures 1653 with screws passing through the fourth circuit board 164. The bracket 165 further comprises two lugs 1651 on both sides of a main body of the bracket, the lugs each being provided with a hole for receiving a screw 1652. Whereby the bracket is able to be fixed to the first circuit board 161 by the connection of the lugs and the screws. In another preferred embodiment shown in FIG. 7, the bracket 165 further includes a sliding portion 1654 that is able to mate with a slide rail structure on the inner wall of the body portion 153 of the housing, to facilitate the bracket to carry the fourth circuit board to slide to a proper position upon assembling.

Next, charging/discharging control modes of the charging device 1 according to the present disclosure will exemplarily described. In general, the charging device of the present disclosure is capable of performing the charging and discharging operation according to the following control logic. When the charging device is electrically connected to the commercial power grid, the charging device is capable of respectively distributing an output current value to each of the battery pack(s) and/or external device that is electrically connected to and charged by the charging device, according to one or more parameters, and simultaneously transmitting power to the battery pack(s) and/or the external device according to the distributed output current values, the one or more parameters comprising: a number of electrically-connected battery packs and/or external device, a predetermined priority relationship regarding current value distribution, and a rated output current value at an interface of the charging device corresponding to each of the battery pack(s) and/or external device. When at least one battery pack (e.g., the first battery pack and/or the second battery pack) and the external device are simultaneously connected to the charging device, whereas the charging device is not electrically connected to the commercial power grid, the charging device is configured to enable the at least one battery pack to transmit power to the external device.

Specifically, the charging device of the present disclosure operates in the following multiple modes.

When the whole charging system is powered by the commercial power grid, i.e., when an external adapter is electrically connected to the input port 13 and powers the charging device at an input current value I₀, the charging device preferentially transmits power to the external device at a rated output current value I₁ at the output port, and distributes the remaining capacity to the battery pack(s). Specifically, there are at least the following cases:
Case 1: when the external device and both the first battery pack and the second battery pack are simultaneously electrically connected to the charging device and all in a charging stat, the charging device preferentially transmits power to the external device at the rated output current value I₁ at the output port, and distributes at least a portion of current value in a remaining current value I₀-I₁ respectively to the first battery pack and the second battery pack according to respective rated capacity levels of the first battery pack and second battery pack in combination with taking into account a rated output current value at an interface (e.g., the first and second charging interfaces 111, 121, and/or the first and second discharging interfaces 112, 122 as described above) of the charging device to which each battery pack is connected;
Case 2: when the external device and only one of the first battery pack and the second battery pack are simultaneously electrically connected to the charging device and both in a charging state, the charging device preferentially transmits power to the external device at the rated output current value I₁ at the output port, and distributes at least a portion of current value in the remaining current value I₀-I₁ to the battery pack by taking into account the rated output current value at the interface of the charging device to which the battery pack is electrically connected;
Case 3: when the first battery pack and the second battery pack are simultaneously connected to the charging device and both in the state of charge, and there is no external device connected to the charging device, the charging device distributes at least a portion of current in the input current value I₀ respectively to the first battery pack and the second battery pack , according to respective rated capacity levels of the first battery pack and the second battery pack and in combination with taking into account the rated output current value at the interface of the charging device to which each battery pack is electrically connected.

As an example, in Case 2, when the rated output current value I₂ or I₃ at the interface of the charging device to which one of the first and second battery packs is connected does not exceed the remaining current value I₀-I₁, the charging device is configured to output power to the battery pack at the rated output current value I₂ or I₃. As an example, in Case 3, when a sum of the rated output current value I₂ at the interface of the charging device to which the first battery pack is connected (the first charging interface 111 or the first discharging interface 112 in the first battery engaging structure 11) and the rated output current value I₃ at the interface of the charging device to which the second battery pack is connected (the second charging interface 121 or the second discharging interface 122 in the second battery engaging structure 12) does not exceed the input current value I₀, the charging device is configured to transmit power to the first battery pack at the rated output current value I₂, and transmit power to the second battery pack at the rated output current value I₃.

In some situations under Case 1 and/or Case 3, when the sum of the rated output current values I₂ and I₃ exceeds the total current value that is able to be distributed to the first battery pack and the second battery pack: if a rated capacity level of the first battery pack is higher than that of the second battery pack, the current value distributed to the first battery pack is higher than that distributed to the second battery pack; and if the rated capacity level of the first battery pack is equal to that of the second battery pack, the current value distributed to the first battery pack is equal to that distributed to the second battery pack.

In other situations under Case 1 and/or Case 3, when the sum of the rated output current values I₂ and I₃ exceeds the total current value that is able to be distributed to the first battery pack and the second battery pack: if a remaining capacity of the first battery pack is higher than that of the second battery pack, the current value distributed to the first battery pack is lower than that distributed to the second battery pack; if the remaining capacity of the first battery pack is equal to that of the second battery pack, the current value distributed to the first battery pack is equal to that distributed to the second battery pack.

As an example, Table 1 below shows the distribution of the current values of the charging device according to the present disclosure under different charging modes. The charging device in the table receives an input current of 5 V, 4A from an external adapter through the input port 13, i.e., in the present example the above-mentioned input current value I₀ is 4A. In addition, the rated output current value I₁ at the output port to which the external device is electrically connected, the rated output current value I₂ at the interface of the charging device to which the second battery pack is connected, and the rated output current value I₃ at the interface of charging device to which the first battery pack is connected are all 2A in this example. In addition, the first and second battery packs in the example are the same type of battery packs with the same specification and the same rated battery capacity, and a rated voltage of the battery packs are both 12V

**Table 1**

| Charging cases | | The connection interface of the first battery pack | The connection interface of the second battery pack | External device |
|---|---|---|---|---|
| Maximum charging current (in Ampere A) | Only the external device | - | - | 2 |
| | The external device + the first battery pack | 2 | - | 2 |
| | The external device + the second battery pack | - | 2 | 2 |
| | The first battery pack + second battery pack (with substantially the same remaining capacity) | 2 | 2 | - |
| | The first battery pack + the second battery pack (the remaining capacity of the first battery pack is greater than that of the second battery pack) | 1 | 3 | - |
| | The external battery + the first battery pack + the second battery pack | 1 | 1 | 2 |

When the entire charging system is not connected to the commercial power grid, i.e., when the input port 13 is not connected to the power grid via the adapter to obtain power from the power grid, the charging device is configured to enable at least one of the first battery pack and the second battery pack to transmit power to the external device. Specifically, there are at least the following cases:
Case 1: when the external device and only one of the first battery pack and the second battery pack are simultaneously electrically connected to the charging device, the charging device is configured to enable the connected battery pack to transmit power to the external device;
Case 2: when the first battery pack and the second battery pack, and the external device are simultaneously electrically connected to the charging device, the charging device is configured to control the first battery pack and second battery pack to transmit power to the external device according to a remaining capacity of each of the first battery pack and the second battery pack.

More specifically, in the above Case 2, the charging device is configured to: when a remaining capacity of the first battery pack is higher than that of the second battery pack, control the first battery pack to transmit power to the external device until the remaining capacity of the first battery pack is equal to that of the second battery pack; and control the first battery pack and the second battery pack to simultaneously transmit power to the external device when the remaining capacity of the first battery pack is equal to that of the second battery pack.

It needs to be appreciated that when the charging device is not electrically connected to the power grid and the first battery pack and/or the second battery pack are electrically connected to the charging device, the charging device is configured to automatically wake up and provide power to the external device upon the external device being electrically connected to the charging device.

According to another aspect of the present disclosure, there is provided a charging system comprising the charging device described above, and at least one of: an external device, an external adapter, and one or more battery packs used for a power tool and able to be mechanically and electrically connected with the charging device.

As described above, the charging system formed by the charging device according to the present disclosure, and the external device, the one or more battery packs and/or the adapter electrically connected to the power grid provides a plurality of different charging/discharging modes, which is able to supply power to a plurality of types and specifications of electric devices and/or battery packs, realize multi-functional charging/discharging operations, and exhibit a high integration and convenience in carrying. The user may select various charging/discharging modes as actually needed.

The previous depictions of the various embodiments of the present disclosure are provided to those having ordinary skill in the art for an illustration purpose, and are not intended to exclude other embodiments or limit the present disclosure to a single disclosed embodiment. As described above, many alternatives and modifications of the present disclosure will be apparent to those skilled in the art. Thus, although some alternative embodiments have been described in detail, those having ordinary skill in the art will understand or relatively easily develop other embodiments. The present disclosure is intended to include all alternatives, modifications and variations of the present disclosure described herein, as well as other embodiments that fall within the spirit and scope of the disclosure described above.

Further aspects of the disclosure may be summarized as follows:
1. A charging device (1) configured to be operably mechanically and electrically connected with a plurality of battery packs (2) at different sides of the charging device, to transmit power to the battery packs or to allow the battery packs to transmit power to the charging device, characterized in that, the charging device comprises:
   a first battery pack engaging portion (11) for mechanically and electrically connecting with a first battery pack, wherein the first battery pack engaging portion is arranged on a first surface of the charging device, and is configured to allow the charging device to transmit power to the first battery pack and allow the first battery pack to transmit power to the charging device;
   a second battery pack engaging portion (12) for mechanically and electrically connecting with a second battery pack, wherein the second battery pack engaging portion is arranged on a second surface of the charging device different from the first surface, and is configured to allow the charging device to transmit power to the second battery pack and allow the second battery pack to transmit power to the charging device; and
   an output port (14) arranged on a third surface of the charging device different from the first surface and the second surface, and is configured to be able to electrically connect with an external device to transmit power to the external device,
   wherein, when the charging device is electrically connected to a commercial power grid, the charging device is configured to respectively distribute an output current value to each of the battery packs and/or external device electrically connected to and charged by the charging device according to one or more parameters, and simultaneously transmit power to the battery packs and/or the external device according to distributed output current values, the one or more parameters comprising: a number of electrically-connected battery packs and/or external device, a predetermined priority relationship regarding current value distribution, and a rated output current value at an interface of the charging device corresponding to each of the battery packs and/or external device; and
   wherein, when the external device and at least one battery pack are simultaneously connected to the charging device, while the charging device is not electrically connected to the commercial power grid, the charging device is configured to enable the at least one battery pack to transmit power to the external device.
2. The charging device (1) according to aspect 1, characterized in that, the first battery pack engaging portion (11) comprises:
   a first charging interface (111) through which the first battery pack is able to transmit power to the charging device; and
   a first discharging interface (112) through which the charging device is able to transmit power to the first battery pack, and
   the second battery pack engaging portion (12) comprises:
      a second charging interface (121) through which the second battery pack is able to transmit power to the charging device; and
      a second discharging interface (122) through which the charging device is able to transmit power to the second battery pack.
3. The charging device (1) according to any one of the preceding aspects, in particular aspect 1, characterized in that, the first surface and second surface are positioned on opposite sides of the charging device, respectively.
4. The charging device (1) according to any one of the preceding aspects, in particular aspect 2, characterized in that, the charging device further comprises an input port (13) arranged on the third surface, wherein the input port is configured to be able to electrically connect to an external adapter electrically connected to the commercial power grid to transmit power to the charging device.
5. The charging device (1) according to any one of the preceding aspects, in particular aspect 4, characterized in that, when the external adapter is electrically connected to the input port (13) and supplies power to the charging device, the charging device is configured to preferentially distribute an output current value to the external device.
6. The charging device (1) according to any one of the preceding aspects, in particular aspect 5, characterized in that, when the external adapter is electrically connected to the input port (13) and supplies power to the charging device at an input current value I₀, the charging device is configured to:
   when the first battery pack and the second battery pack, and the external device are simultaneously electrically connected to the charging device and are all in a charging state, preferentially transmit power to the external device at a rated output current value I₁ at the output port (14), and distribute at least a portion of a remaining current value I₀-I₁ to the first battery pack and the second battery pack respectively, according to a rated capacity level of each of the first battery pack and second battery pack, and in combination with taking into account a rated output current value at the interface to which each battery pack is connected.
7. The charging device (1) according to any one of the preceding aspects, in particular aspect 5, characterized in that, when the external adapter is electrically connected to the input port (13) and supplies power to the charging device at an input current value I₀, the charging device is configured to:
   when the external device and one of the first battery pack and the second battery pack are simultaneously electrically connected to the charging device and both in a charging state, preferentially transmit power to the external device at a rated output current value I₁ at the output port (14), and distribute at least a portion of a remaining current value I₀-I₁ to the electrically-connected battery pack taking into account a rated output current value at the interface to which the battery pack is electrically connected.
8. The charging device (1) according to any one of the preceding aspects, in particular aspect 5, characterized in that,
   when the external adapter is electrically connected to the input port (13) and supplies power to the charging device at an input current value I₀, the charging device is configured to:
   when the first battery pack and the second battery pack are simultaneously connected to the charging device and both in a charging state, and there is no external device connected to the charging device, distribute at least a portion of the input current value I₀ to the first battery pack and the second battery pack respectively, according to a rated capacity level of each of the first battery pack and the second battery pack and in combination with taking into account a rated output current value at the interface to which each battery pack is electrically connected.
9. The charging device (1) according to any one of the preceding aspects, in particular aspect 8, characterized in that, in a case where a sum of a rated output current value I₂ at the interface to which the first battery pack is connected and a rated output current value I₃ at the interface to which the second battery pack is connected does not exceed the input current value I₀, the charging device is configured to transmit power to the first battery pack at the rated output current value I₂, and transmit power to the second battery pack at the rated output current value 13.
10. The charging device (1) according to any one of the preceding aspects, in particular aspect 6 or aspect 8, characterized in that, when a sum of the rated output current values at the interfaces to which the first battery pack and second battery pack are electrically connected exceeds a total current value that is able to be distributed to the first battery pack and the second battery pack:
   if a rated capacity level of the first battery pack is higher than a rated capacity level of the second battery pack, a current value distributed to the first battery pack is higher than a current value distributed to the second battery pack; and
   if the rated capacity level of the first battery pack is equal to the rated capacity level of the second battery pack, the current value distributed to the first battery pack is equal to the current value distributed to the second battery pack.
11. The charging device (1) according to any one of the preceding aspects, in particular aspect 1, characterized in that, when the first battery pack, the second battery pack and the external device are simultaneously electrically connected to the charging device, while the charging device is not electrically connected to the commercial power grid, the charging device is configured to control the first battery pack and second battery pack to transmit power to the external device according to a remaining capacity of each of the first battery pack and the second battery pack.
12. The charging device (1) according to any one of the preceding aspects, in particular aspect 11, characterized in that, the charging device is configured to:
   when a remaining capacity of the first battery pack is higher than a remaining capacity of the second battery pack, control the first battery pack to transmit power to the external device until the remaining capacity of the first battery pack is equal to the remaining capacity of the second battery pack; and
   when the remaining capacity of the first battery pack is equal to the remaining capacity of the second battery pack, control the first battery pack and the second battery pack to simultaneously transmit power to the external device.
13. The charging device (1) according to any one of the preceding aspects, in particular aspect 4, characterized in that, the charging device comprises a housing (15), and the housing comprises:
   a body portion (1530), and
   a first end cover (151) and a second end cover (152) at opposite ends of the body portion, wherein the first end cover and the second end cover are configured to be respectively engageable with the opposite ends of the body portion to together define an interior space of the housing, wherein the first surface is formed by the first end cover (151), the second surface is formed by the second end cover (152), and the third surface is formed by the body portion (153).
14. The charging device (1) according to any one of the preceding aspects, in particular aspect 13, characterized in that, each of the first end cover (151) and the second end cover (152) are configured to comprise a concave structure (1511) recessed toward the interior space of the housing, wherein the concave structure is configured to be shaped to mate with a corresponding convex structure (2511) on each of the first battery pack and the second battery pack, so as to receive the convex structure when the battery pack (2) is connected to the charging device (1), and wherein the first surface and the second surface are formed by a bottom surface (15111) of the concave structure of the first end cover and a bottom surface of the concave structure of the second end cover, respectively.
15. The charging device (1) according to any one of the preceding aspects, in particular aspect 14, characterized in that, a control component (16) is arranged within the housing, and the control component comprises:
   a first circuit board (161) positioned at a middle position of the body portion (153) and extending substantially parallel to the first end cover (151) and the second end cover (152);
   a second circuit board (162) and a third circuit board (163) which are respectively positioned on both sides of an extension plane defined by the first circuit board and extend substantially parallel to the first circuit board; and
   a fourth circuit board (164) positioned at a side edge position of the first circuit board and extending substantially perpendicular to the first circuit board.
16. The charging device (1) according to any one of the preceding aspects, in particular aspect 15, characterized in that, the first charging interface (111) and the second charging interface (121) are arranged directly on the first circuit board (161), and extend from surfaces on opposite sides of the first circuit board along opposite directions respectively, and the first surface and the second surface are each provided with a first opening (15112) that allows the first charging interface and the second charging interface to be exposed to a corresponding interface on the battery pack.
17. The charging device (1) according to aspect any one of the preceding aspects, in particular 16, characterized in that, each of the first charging interface (111) and the second charging interface (121) comprises:
   a plurality of terminals configured to extend from the first circuit board towards a first opening (15112) in a respective surface of the first surface and second surface, wherein the plurality of terminals comprises: a positive charging terminal (1111a) and a negative charging terminal (1111b) which are engageable with corresponding terminals in a connected battery pack, to allow the battery pack to transmit power to the charging device; and
   a receiving portion (1113) arranged around the plurality of terminals, wherein the receiving portion is configured to extend from the first circuit board (161) to be flush with the first opening (15112) of a respective surface of the first surface and second surface, and be shaped to mate with the first opening, and wherein the receiving portion is configured to be shaped to mate with a protruding portion of a corresponding interface of the connected battery pack so as to accommodate the protruding portion.
18. The charging device (1) according to any one of the preceding aspects, in particular aspect 15, characterized in that, the first discharging interface (112) and the second discharging interface (122) are respectively arranged on surfaces of the second circuit board (162) and the third circuit board (163) which face away from each other, and extend in opposite directions beyond second openings (15113) respectively provided on the first surface and the second surface and allowing the first discharging interface and the second discharging interface to be exposed to corresponding interfaces of the connected battery packs.
19. The charging device (1) according to any one of the preceding aspects, in particular aspect 17, characterized in that, the input port (13) and the output port (14) are arranged on the fourth circuit board (164), and extend towards the body portion of the housing to a position flushing with a third opening (1531) and a fourth opening (1532) provided on the third surface and respectively allowing the input port and output port to be exposed to corresponding interfaces of the external adapter and the external device.
20. The charging device (1) according to any one of the preceding aspects, in particular aspect 19, characterized in that, the body portion (153) of the housing (15) is constructed as a layered structure which comprises an inside support layer and a covering layer covering an outer side of the support layer, wherein the support layer comprises a plastic material, and the covering layer comprises a thermoplastic elastomeric material.
21. The charging device (1) according to any one of the preceding aspects, in particular aspect 20, characterized in that, the third opening (1531) and the fourth opening (1532) on the third surface are provided on the support layer, and the covering layer is provided with a material removal area around the third opening (1531) and the fourth opening (1532), and wherein the covering layer is sealingly secured to the support layer along an edge of the material removal area, so as to form a sealed edge.
22. The charging device (1) according to any one of the preceding aspects, in particular aspect 15, characterized in that, the first circuit board, the second circuit board, and/or the third circuit board are secured to the housing by a threaded connection, and wherein the fourth circuit board is fixedly connected to the first circuit board by a bracket (165), and the second circuit board and/or the third circuit board are relatively fixed to the first circuit board by a rested member (168).
23. The charging device (1) according to any one of the preceding aspects, in particular aspect 22, characterized in that, the bracket is provided with a sliding portion (1654) for engaging a slide rail arranged on an inner wall of the housing, to guide the control component into the housing.
24. The charging device (1) according to any one of the preceding aspects, in particular aspect 13, characterized in that, the first battery pack engaging portion (11) and the second battery pack engaging portion (12) are each provided with a snap receiving portion (113) for mating with a snap member (213) correspondingly arranged on each of the first battery pack and the second battery pack, so as to mechanically fix the battery pack to the charging device.
25. The charging device (1) according to any one of the preceding aspects, in particular aspect 1, characterized in that, if a remaining capacity of the first battery pack is higher than a remaining capacity of the second battery pack, a current value distributed to the first battery pack is lower than a current value distributed to the second battery pack; and
   if the remaining capacity of the first battery pack is equal to the remaining capacity of the second battery pack, the current value distributed to the first battery pack is equal to the current value distributed to the second battery pack.
26. The charging device (1) according to any one of the preceding aspects, in particular aspect 1, characterized in that, when the charging device (1) is not electrically connected to the commercial power grid and the first battery pack and/or the second battery pack are electrically connected to the charging device, the charging device is configured to automatically wake up and supply power to the external device upon the external device being electrically connected to the charging device.
27. A charging system, characterized in that,
   the charging system comprises: the charging device (1) according to any of aspects 1-26; and at least one of an external device, an external adapter, and a plurality of battery packs (2) that is able to be mechanically and electrically connected to the charging device.

## Claims

1. A charging device (1) configured to be operably mechanically and electrically connected with a plurality of battery packs (2) at different sides of the charging device, to transmit power to the battery packs or to allow the battery packs to transmit power to the charging device, **characterized in that**, the charging device comprises:
a first battery pack engaging portion (11) for mechanically and electrically connecting with a first battery pack, wherein the first battery pack engaging portion is arranged on a first surface of the charging device, and is configured to allow the charging device to transmit power to the first battery pack and allow the first battery pack to transmit power to the charging device;
a second battery pack engaging portion (12) for mechanically and electrically connecting with a second battery pack, wherein the second battery pack engaging portion is arranged on a second surface of the charging device different from the first surface, and is configured to allow the charging device to transmit power to the second battery pack and allow the second battery pack to transmit power to the charging device; and
an output port (14) arranged on a third surface of the charging device different from the first surface and the second surface, and is configured to be able to electrically connect with an external device to transmit power to the external device,
wherein, when the charging device is electrically connected to a commercial power grid, the charging device is configured to respectively distribute an output current value to each of the battery packs and/or external device electrically connected to and charged by the charging device according to one or more parameters, and simultaneously transmit power to the battery packs and/or the external device according to distributed output current values, the one or more parameters comprising: a number of electrically-connected battery packs and/or external device, a predetermined priority relationship regarding current value distribution, and a rated output current value at an interface of the charging device corresponding to each of the battery packs and/or external device; and
wherein, when the external device and at least one battery pack are simultaneously connected to the charging device, while the charging device is not electrically connected to the commercial power grid, the charging device is configured to enable the at least one battery pack to transmit power to the external device.

2. The charging device (1) according to claim 1, **characterized in that**,
the first battery pack engaging portion (11) comprises:
a first charging interface (111) through which the first battery pack is able to transmit power to the charging device; and
a first discharging interface (112) through which the charging device is able to transmit power to the first battery pack, and
the second battery pack engaging portion (12) comprises:
a second charging interface (121) through which the second battery pack is able to transmit power to the charging device; and
a second discharging interface (122) through which the charging device is able to transmit power to the second battery pack.

3. The charging device (1) according to either claim 1 or claim 2, **characterized in that**,
the first surface and second surface are positioned on opposite sides of the charging device, respectively.

4. The charging device (1) according to any one of the previous claims, in particular claim 2, **characterized in that**,
the charging device further comprises an input port (13) arranged on the third surface, wherein the input port is configured to be able to electrically connect to an external adapter electrically connected to the commercial power grid to transmit power to the charging device,
preferably, when the external adapter is electrically connected to the input port (13) and supplies power to the charging device, the charging device is configured to preferentially distribute an output current value to the external device.

5. The charging device (1) according to claim 4, **characterized in that**,
when the external adapter is electrically connected to the input port (13) and supplies power to the charging device at an input current value I₀, the charging device is configured to:
when the first battery pack and the second battery pack, and the external device are simultaneously electrically connected to the charging device and are all in a charging state, preferentially transmit power to the external device at a rated output current value I₁ at the output port (14), and distribute at least a portion of a remaining current value I₀-I₁ to the first battery pack and the second battery pack respectively, according to a rated capacity level of each of the first battery pack and second battery pack, and in combination with taking into account a rated output current value at the interface to which each battery pack is connected;
when the external device and one of the first battery pack and the second battery pack are simultaneously electrically connected to the charging device and both in a charging state, preferentially transmit power to the external device at a rated output current value I₁ at the output port (14), and distribute at least a portion of a remaining current value I₀-I₁ to the electrically-connected battery pack taking into account a rated output current value at the interface to which the battery pack is electrically connected; or
when the first battery pack and the second battery pack are simultaneously connected to the charging device and both in a charging state, and there is no external device connected to the charging device, distribute at least a portion of the input current value I₀ to the first battery pack and the second battery pack respectively, according to a rated capacity level of each of the first battery pack and the second battery pack and in combination with taking into account a rated output current value at the interface to which each battery pack is electrically connected.

6. The charging device (1) according to any one of the previous claims, in partciuarl claim 5, **characterized in that**,
when the first battery pack and the second battery pack are simultaneously connected to the charging device and both in a charging state, and there is no external device connected to the charging device, in a case where a sum of a rated output current value I₂ at the interface to which the first battery pack is connected and a rated output current value I₃ at the interface to which the second battery pack is connected does not exceed the input current value I₀, the charging device is configured to transmit power to the first battery pack at the rated output current value I₂, and transmit power to the second battery pack at the rated output current value 13.

7. The charging device (1) according to any one of the previous claims, in particular claim 5, **characterized in that**,
when the first battery pack, the second battery pack and the external device are simultaneously electrically connected to the charging device and are all in a charging state; or when the first battery pack and the second battery pack are simultaneously connected to the charging device and both in a charging state, and there is no external device connected to the charging device,
in a case where a sum of the rated output current values at the interfaces to which the first battery pack and second battery pack are electrically connected exceeds a total current value that is able to be distributed to the first battery pack and the second battery pack:
if a rated capacity level of the first battery pack is higher than a rated capacity level of the second battery pack, a current value distributed to the first battery pack is higher than a current value distributed to the second battery pack; and
if the rated capacity level of the first battery pack is equal to the rated capacity level of the second battery pack, the current value distributed to the first battery pack is equal to the current value distributed to the second battery pack.

8. The charging device (1) according to any one of the previous claims, **characterized in that**,
when the first battery pack, the second battery pack and the external device are simultaneously electrically connected to the charging device, while the charging device is not electrically connected to the commercial power grid, the charging device is configured to control the first battery pack and second battery pack to transmit power to the external device according to a remaining capacity of each of the first battery pack and the second battery pack,
preferably, the charging device is configured to:
when a remaining capacity of the first battery pack is higher than a remaining capacity of the second battery pack, control the first battery pack to transmit power to the external device until the remaining capacity of the first battery pack is equal to the remaining capacity of the second battery pack; and
when the remaining capacity of the first battery pack is equal to the remaining capacity of the second battery pack, control the first battery pack and the second battery pack to simultaneously transmit power to the external device.

9. The charging device (1) according to any one of the previous claims, in particular claim 4, **characterized in that**,
the charging device comprises a housing (15), and the housing comprises:
a body portion (1530), and
a first end cover (151) and a second end cover (152) at opposite ends of the body portion, wherein the first end cover and the second end cover are configured to be respectively engageable with the opposite ends of the body portion to together define an interior space of the housing,
wherein the first surface is formed by the first end cover (151), the second surface is formed by the second end cover (152), and the third surface is formed by the body portion (153),
preferably, each of the first end cover (151) and the second end cover (152) are configured to comprise a concave structure (1511) recessed toward the interior space of the housing, wherein the concave structure is configured to be shaped to mate with a corresponding convex structure (2511) on each of the first battery pack and the second battery pack, so as to receive the convex structure when the battery pack (2) is connected to the charging device (1), and wherein the first surface and the second surface are formed by a bottom surface (15111) of the concave structure of the first end cover and a bottom surface of the concave structure of the second end cover, respectively,
more preferably, a control component (16) is arranged within the housing, and the control component comprises:
a first circuit board (161) positioned at a middle position of the body portion (153) and extending substantially parallel to the first end cover (151) and the second end cover (152);
a second circuit board (162) and a third circuit board (163) which are respectively positioned on both sides of an extension plane defined by the first circuit board and extend substantially parallel to the first circuit board; and
a fourth circuit board (164) positioned at a side edge position of the first circuit board and extending substantially perpendicular to the first circuit board,
more preferably, the first charging interface (111) and the second charging interface (121) are arranged directly on the first circuit board (161), and extend from surfaces on opposite sides of the first circuit board along opposite directions respectively, and the first surface and the second surface are each provided with a first opening (15112) that allows the first charging interface and the second charging interface to be exposed to a corresponding interface on the battery pack,
more preferably, each of the first charging interface (111) and the second charging interface (121) comprises:
a plurality of terminals configured to extend from the first circuit board towards a first opening (15112) in a respective surface of the first surface and second surface, wherein the plurality of terminals comprises:
a positive charging terminal (1111a) and a negative charging terminal (1111b) which are engageable with corresponding terminals in a connected battery pack, to allow the battery pack to transmit power to the charging device; and
a receiving portion (1113) arranged around the plurality of terminals, wherein the receiving portion is configured to extend from the first circuit board (161) to be flush with the first opening (15112) of a respective surface of the first surface and second surface, and be shaped to mate with the first opening, and wherein the receiving portion is configured to be shaped to mate with a protruding portion of a corresponding interface of the connected battery pack so as to accommodate the protruding portion,
more preferably, the first battery pack engaging portion (11) and the second battery pack engaging portion (12) are each provided with a snap receiving portion (113) for mating with a snap member (213) correspondingly arranged on each of the first battery pack and the second battery pack, so as to mechanically fix the battery pack to the charging device.

10. The charging device (1) according to any one of the previous claims, in particular claim 9, **characterized in that**,
the first discharging interface (112) and the second discharging interface (122) are respectively arranged on surfaces of the second circuit board (162) and the third circuit board (163) which face away from each other, and extend in opposite directions beyond second openings (15113) respectively provided on the first surface and the second surface and allowing the first discharging interface and the second discharging interface to be exposed to corresponding interfaces of the connected battery packs.

11. The charging device (1) according to any one of the previous claims, in particular claim 9, **characterized in that**,
the input port (13) and the output port (14) are arranged on the fourth circuit board (164), and extend towards the body portion of the housing to a position flushing with a third opening (1531) and a fourth opening (1532) provided on the third surface and respectively allowing the input port and output port to be exposed to corresponding interfaces of the external adapter and the external device,
preferably, the body portion (153) of the housing (15) is constructed as a layered structure which comprises an inside support layer and a covering layer covering an outer side of the support layer, wherein the support layer comprises a plastic material, and the covering layer comprises a thermoplastic elastomeric material,
more preferably, the third opening (1531) and the fourth opening (1532) on the third surface are provided on the support layer, and the covering layer is provided with a material removal area around the third opening (1531) and the fourth opening (1532),
more preferably. the covering layer is sealingly secured to the support layer along an edge of the material removal area, so as to form a sealed edge.

12. The charging device (1) according to any one of the previous claims, in particular claim 9, **characterized in that**,
the first circuit board, the second circuit board, and/or the third circuit board are secured to the housing by a threaded connection, and wherein the fourth circuit board is fixedly connected to the first circuit board by a bracket (165), and the second circuit board and/or the third circuit board are relatively fixed to the first circuit board by a rested member (168),
preferably, the bracket is provided with a sliding portion (1654) for engaging a slide rail arranged on an inner wall of the housing, to guide the control component into the housing.

13. The charging device (1) according to any one of the previous claims, **characterized in that**,
if a remaining capacity of the first battery pack is higher than a remaining capacity of the second battery pack, a current value distributed to the first battery pack is lower than a current value distributed to the second battery pack; and
if the remaining capacity of the first battery pack is equal to the remaining capacity of the second battery pack, the current value distributed to the first battery pack is equal to the current value distributed to the second battery pack.

14. The charging device (1) according to any one of the previous claims, **characterized in that**,
when the charging device (1) is not electrically connected to the commercial power grid and the first battery pack and/or the second battery pack are electrically connected to the charging device, the charging device is configured to automatically wake up and supply power to the external device upon the external device being electrically connected to the charging device.

15. A charging system, **characterized in that**,
the charging system comprises:
the charging device (1) according to any of claims 1-14; and
at least one of an external device, an external adapter, and a plurality of battery packs (2) that is able to be mechanically and electrically connected to the charging device.
